# EUROPÄISCHE PATENTSCHRIFT

(11) **EP 2 931 573 B1**
(45) Veröffentlichungstag und Bekanntmachung des Hinweises auf die Patenterteilung: **21.03.2018**
(21) Anmeldenummer: 14700824.7
(22) Anmeldetag: 08.01.2014
(51) Int. Cl.: B60T 8/32, B60T 13/14, B60T 13/68

(54) **BREMSEINHEIT FÜR EIN FAHRZEUG UND FAHRZEUG MIT EINER DERARTIGEN BREMSEINHEIT**
BRAKE UNIT FOR A VEHICLE AND VEHICLE WITH A BRAKE UNIT OF THIS TYPE
UNITÉ DE FREINAGE POUR UN VÉHICULE ET VÉHICULE ÉQUIPÉ D'UNE TELLE UNITÉ DE FREINAGE

(30) Priorität: 31.01.2013 DE 102013201623
(43) Veröffentlichungstag der Anmeldung: 21.10.2015
(73) Patentinhaber: Siemens Aktiengesellschaft, 80333 München (DE)
(72) Erfinder: SCHIFFERS, Toni, 41812 Erkelenz (DE); BILDSTEIN, Markus, 87534 Oberstaufen (DE); GAILE, Anton, 88299 Leutkirch (DE)
(86) Internationale Anmeldenummer: PCT/EP2014/050229
(87) Internationale Veröffentlichungsnummer: WO 2014/117968

(56) Entgegenhaltungen:
- EP-A2- 0 392 388
- WO-A1-2012/111830
- WO-A1-2012/118133
- WO-A2-2008/031702
- DE-A1- 2 606 499
- DE-A1-102009 042 965
- US-A- 5 253 736
- US-A1- 2010 001 578
- US-A1- 2012 192 757
- US-A1- 2012 192 757

## Beschreibung

Die Erfindung betrifft eine Bremseinheit für ein Fahrzeug, insbesondere eine Schienenfahrzeug, mit einer elektro-hydraulischen Sollwert-Kraft-Umsetzungseinrichtung, die einen Behälter zum Bereitstellen von Hydraulikflüssigkeit, einen über ein Hydraulikleitungssystem mit dem Behälter verbundenen Bremszylinder mit Bremskolben sowie Steuermittel umfasst, wobei die Steuermittel geeignet ausgebildet sind, unter der Einwirkung elektrischer Ausgangssignale einer Sollwertregelungseinrichtung einen den Bremskolben beaufschlagenden Istwert eines Hydraulikdruckes in dem Bremszylinders einzustellen.

Eine derartige Bremseinheit, die sich hydraulisch selbst versorgt und damit keine hydraulische Schnittstelle zum Fahrzeug erfordert, ist beispielsweise aus der Druckschrift WO 2008/031701 bekannt. Diese bekannte Bremseinheit verfügt über eine hydraulische Selbstverstärkung, so dass sich die ersten Reibungsmittel in konstruktiv aufwendiger Weise relativ zu den zweiten Reibungsmitteln in einer Verzögerungskraftrichtung bewegen müssen.

Weiterhin ist aus der Druckschrift US 2012/0192757 A1 eine gattungsgemäße Bremseinheit bekannt, bei der eine elektromechanische Krafteinheit in Form einer mit einem Speicher verknüpften Pumpe den Hydraulikdruck aufbaut, welcher das Bremsen auslöst.

Ausgehend hiervon liegt der Erfindung die Aufgabe zu Grunde, die Bremseinheit konstruktiv so zu gestalten, dass sie ein vereinfachtes Voreinstellen eines Lüftspiels erster Bremsmittel zu zweiten Bremsmitteln auf einen vorgegebenen Lüftspielwert ermöglicht.

Gelöst wird diese Aufgabe bei einer Bremseinheit mit den Merkmalen des Patentanspruches 1 durch Mittel zum Voreinstellen eines Lüftspiels erster Bremsmittel zu zweiten Bremsmitteln auf einen vorgegebenen Lüftspielwert, wobei die Mittel eine konzentrisch in den Bremskolben eingeschraubte, nichtselbsthemmende Gewindespindel, ein mittels Stirnverzahnung oder Reibschluss mit der Gewindespindel verbundenes, mittels eines Axial-Wälzlagers am Bremszylinder abgestütztes Sperrrad und zwei den Drehwinkel des Sperrrades auf einen vorgegebenen Drehwinkelwert eingrenzende Anschläge umfassen.

Die erfindungsgemäße Bremseinheit kommt ohne konstruktiv aufwendige Selbstverstärkung aus und weist keine externe hydraulische Schnittstelle zum Fahrzeug auf.

Vorzugsweise sind die ersten Bremsmittel geeignet ausgebildet, einen aus der Beaufschlagung des Bremskolbens resultierenden Istwert einer Anpresskraft durch Reibschluss mit zweiten Bremsmitteln in einen Istwert einer Verzögerungsgröße umzusetzen.

Als vorteilhaft wird ein Verbindungsteil zur Befestigung der Bremseinheit, insbesondere an einem Fahrwerk eines Schienenfahrzeugs, angesehen, mittels dessen die Sollwert-Kraft-Umsetzungseinrichtung und die ersten Bremsmittel zu einer Baueinheit verbunden sind. Denn diese Baueinheit kann auf einfache Weise vormontiert werden und sie kann bezüglich Einbauraum und mechanischer Schnittstellen zum Fahrzeug kompatibel zu bisher verwendeten Bremseinheiten gestaltet werden ohne jedoch eine externe hydraulische Versorgung vom Fahrzeug bzw. eine hydraulische Schnittstelle zum Fahrzeug zu erfordern.

Weiterhin wird es als vorteilhaft angesehen, wenn die Sollwertregelungseinrichtung und eine Sensoreinrichtung Bestandteile der Bremseinheit sind, wobei die Sensoreinrichtung, den Istwert des Hydraulikdruckes oder den Istwert der Anpresskraft als Istwert einer Anpressgröße und/oder den Istwert der Verzögerungsgröße ermittelt und wobei die Sollwertregelungseinrichtung geeignet ausgebildet ist, zur Regelung der Verzögerungsgröße die Ausgangssignale so auszugeben, dass der erfasste Istwert der Verzögerungsgröße zumindest einen Sollwert der Verzögerungsgröße entspricht, oder zur Regelung der Anpressgröße die Ausgangssignale so einzugeben, dass der erfasste Istwert der Anpressgröße einem Sollwert der Anpressgröße entspricht. Durch geeignete Parametrierung der Sollwertregelungseinrichtung kann die Bremseinheit somit beispielsweise auf einfache Weise an projektspezifische Anforderungen angepasst werden, so dass mit dieser Bremseinheit ein Höchstmaß an Standardisierung erreicht werden kann.

Vorzugsweise sind die Mittel zum Voreinstellen eines Lüftspiels der ersten Bremsmittel zu den zweiten Bremsmitteln auf einen vorgegebenen Lüftspielwert geeignet ausgebildet bei einem Verschleiß der Bremsmittel das Lüftspiel auf den vorgegebenen Lüftspielwert automatisch nachzustellen. Dabei wird es als vorteilhaft angesehen, wenn der Drehwinkelwert des mittels Stirnverzahnung oder Reibschluss mit der Gewindespindel verbundenen Sperrrades, welches mittels des Axial-Wälzlagers am Bremszylinder abgestützt ist, durch Verstellen der Endanschläge einstellbar ist.

In weiterer bevorzugter Ausgestaltung der erfindungsgemäßen Bremseinheit sind Arretierungsmittel vorgesehen, die geeignet ausgebildet sind, den Bremskolben in einem Parkbremsfall mechanisch zu arretieren. Vorzugsweise umfassen diese Arretierungsmittel eine Sperrklinke, die geeignet ausgebildet ist, in eine Sperrnut des Sperrrades einzugreifen. Dabei kann die Sperrklinke hydraulisch und/oder mechanisch betätigbar sein.

Die Erfindung betrifft auch ein Fahrzeug, insbesondere Schienenfahrzeug, mit einem Fahrwerk, an dem eine erfindungsgemäße Bremseinheit zum Reibschluss mit Bremsmitteln eines Radsatzes des Fahrwerks befestigt ist.

Zur weiteren Erläuterung der Erfindung sind in der
- Figur 1: ein erfindungsgemäßes Fahrzeug in Form eines Schienenfahrzeugs, bei dem Radsätzen von Drehgestellen jeweils zumindest eine erfindungsgemäße Bremseinheit zugeordnet ist, in der
- Figur 2: eine erste Ausführungsform der erfindungsgemäßen Bremseinheit, in den
- Figuren 3: und 4 eine zweite Ausführungsform der erfindungsgemäßen Bremseinheit, in den
- Figuren 5: und 6 eine Bremskolbeneinrichtung der in den Figuren 3 und 4 gezeigten Bremseinheit in verschiedenen Schnittdarstellungen und in den
- Figuren 7: bis 12 Teile der in den Figuren 5 und 6 gezeigten Bremskolbeneinrichtung in verschiedenen Stellungen ihres Bewegungsablaufes gezeigt.

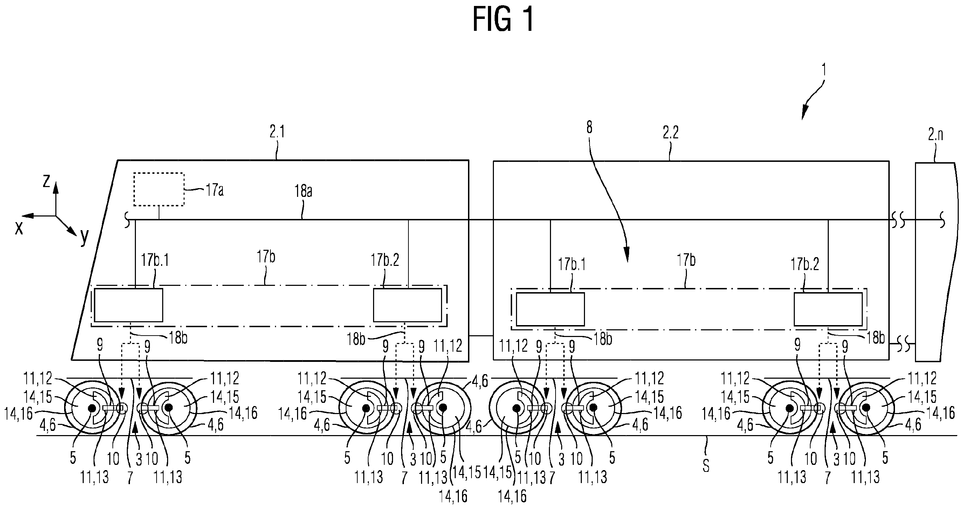

Gemäß Figur 1 verfügt das Schienenfahrzeug 1 über Wagen 2.1, 2.2, ..., 2.n, deren Wagenkästen in hier nicht gezeigter Weise jeweils über eine Sekundärfederung von zwei Fahrwerken in Form von Drehgestellen 3 getragen sind. Die Drehgestelle 3 weisen jeweils zwei Radsätze 4 auf. Die Radsätze 4 weisen jeweils eine Welle 5 auf, an deren Enden Räder 6 gehalten sind. Dabei sind die Wellen 5 der Radsätze 4 in hier nicht gezeigter Weise in Radsatzlagern drehbar gelagert, die über ein Gehäuse und eine Primärfederung an einem Drehgestellrahmen 7 des jeweiligen Drehgestells 3 angebunden sind. Weiterhin verfügt das Schienenfahrzeug 1 über ein hier als Ganzes mit 8 bezeichnetes Bremssystem.

Jeder Welle 5 des Schienenfahrzeuges 1 ist üblicherweise jeweils mindestens eine erfindungsgemäße Bremseinheit 9 zugeordnet. Somit verfügt jeder der Wagen 2.1, 2.2, ..., 2.n über mindestens vier dieser Bremseinheiten 9.

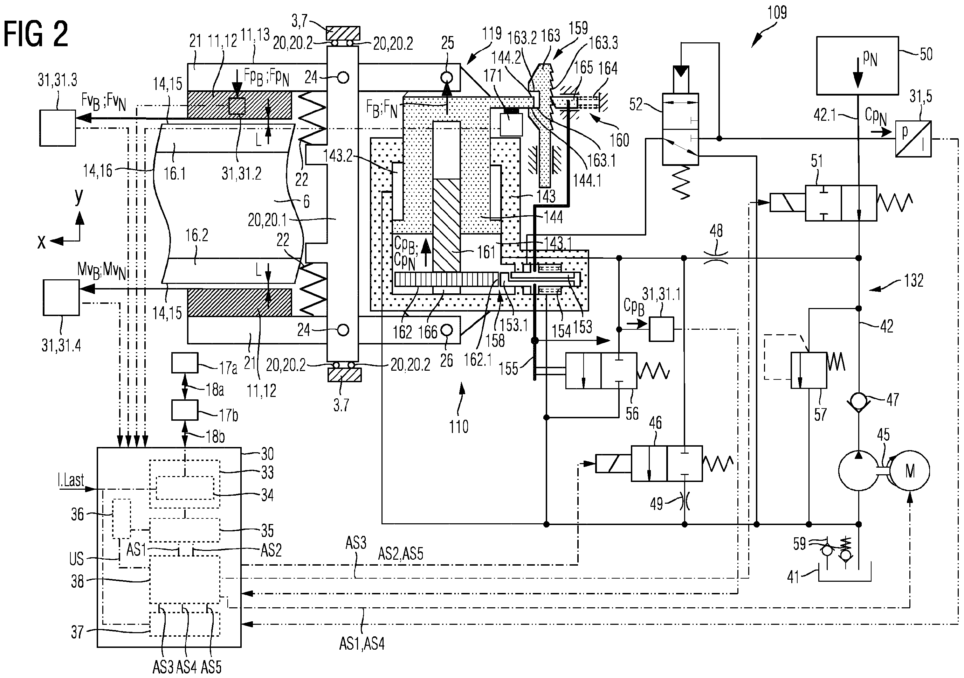

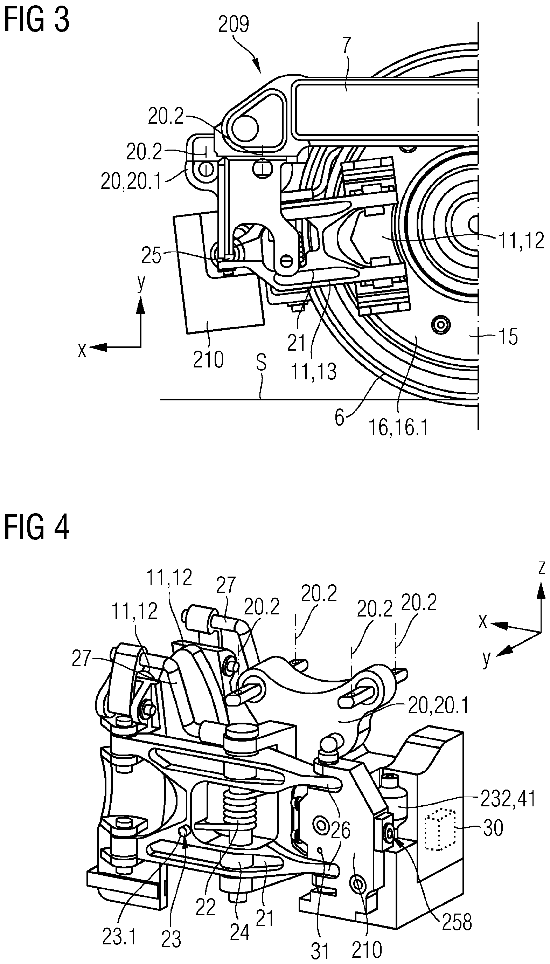

Jede der Bremseinheiten 9 weist einen Bremsaktor 10 und vom Bremsaktor 10 betätigte erste Bremsmittel 11 in Form einer mit Bremsbelägen 12 versehenen Zuspanneinrichtung 13 auf. Dabei wirken die ersten Bremsmittel 11 jeder dieser Bremseinheiten 9 jeweils mit zweiten Bremsmitteln 14 in Form einer mit Bremsflächen 15 versehenen Bremsscheibe 16 zusammen. Die Bremsflächen 15 sind hier von zwei Teilbremsscheiben 16.1, 16.2 gebildet, die an den beiden Seiten eines der Bremseinheit 9 zugeordneten Rades 6 befestigt sind, so dass das mit den beiden Teilbremsscheiben 16.1, 16.2 versehene Rad 6 die Bremsscheibe 16 in Form einer Radbremsscheibe bildet (siehe Figuren 2 und 3).

Anstelle der Radbremsscheibe könnte aber auch eine Wellenbremsscheibe vorgesehen sein, bei der dann eine neben dem Rad drehfest auf der Welle 5 angeordnete separate Scheibe mit Bremsflächen versehen wäre. Weiterhin könnten die ersten Bremsmittel auch mit einem zweiten Bremsmittel in Form des Rades oder in Form einer Bremstrommel zusammen wirken.

Die mit den Bremsbelägen 12 versehene Zuspanneinrichtung 13 ist unter der Einwirkung des Bremsaktors 10 zur Herstellung eines Reibschlusses zwischen den ersten Bremsmitteln 11 und den zweiten Bremsmitteln 14 über der Bremsscheibe 16 zuspannbar.

Der Bremsaktor 10 ist ein elektro-hydraulischer Bremsaktor.

Das Bremssystem 8 weist ein zentrales Steuergerät 17a sowie in jedem der Wagen 2.1, 2.2, ..., 2.n eine Bremssteuerung 17b auf, die von ein oder zwei Bremssteuergeräten 17b.1 und 17b.2 gebildet ist. Dabei sind die Bremssteuergeräte 17b.1 und 17b.2 über einen Zugbus 18a von dem zentralen Steuergerät 17a des Bremssystems 8, das beispielsweise von einer zentralen Fahrzeugsteuerung gebildet ist, ansteuerbar.

Über die Bremssteuerung 17b erhalten die Bremsaktoren 10 der Bremseinheiten 9 oder Gruppen der Bremsaktoren jeweils einen Bremsbefehl. Dabei können die Bremsbefehle über eine oder mehrere Steuerleitungen 18b und/oder BUS und/oder über Funk an die Bremsaktoren 10 übertragen werden.

Die Figur 2 zeigt schematisch eine erste Ausführungsform 109 der erfindungsgemäßen Bremseinheit mit einer ersten Ausführungsform 110 des Bremsaktors.

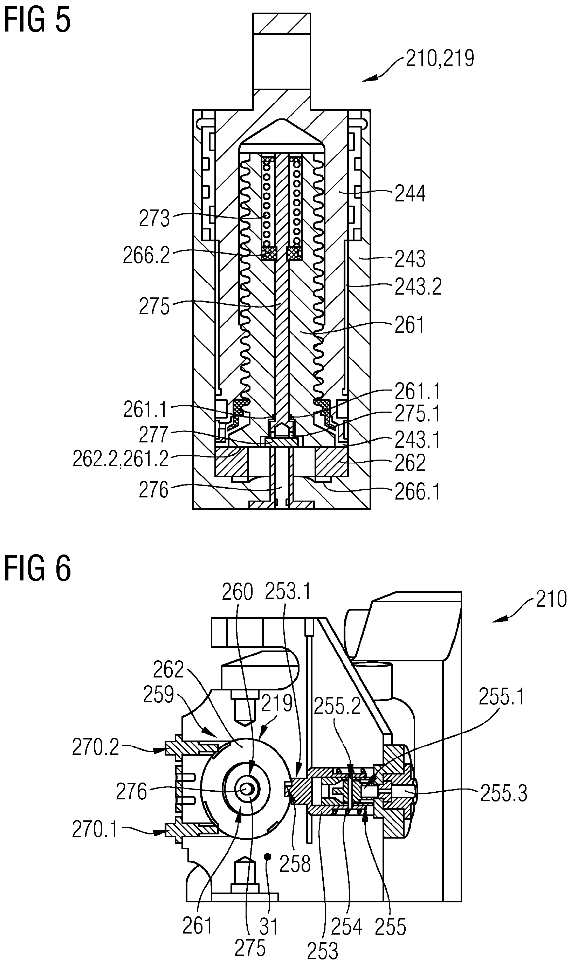

Die Figuren 3 und 4 zeigen eine zweite Ausführungsform 209 der erfindungsgemäßen Bremseinheit mit einer zweiten Ausführungsform 210 des Bremsaktors und die Figuren 5 bis 12 zeigen Details dieser zweiten Ausführungsform 210 des Bremsaktors.

Die beiden Ausführungsformen 109 und 209 der Bremseinheit unterscheiden sich jedoch im Wesentlichen nur in der konstruktiven Ausgestaltung einer als Ganzes mit 119 bzw. 219 bezeichneten Bremskolbeneinrichtung ihrer Bremsaktoren 110 bzw. 210 so dass die Bauteile der beiden Ausführungsformen 109 und 209 der Bremseinheit, die im Wesentlichen gleich ausgebildet sind, in den Figuren 2 bzw. 3 bis 12 jeweils mit den gleichen Bezugszeichen bezeichnet sind.

Beide Ausführungsformen 109 und 209 der Bremseinheit 9 weisen zu ihrer Befestigung (Aufhängung) an dem Drehgestellrahmen 7 ein als Ganzes mit 20 bezeichnetes Verbindungsteil auf, an dem die Zuspanneinrichtung 13 gehalten ist. Das Verbindungsteil 20 umfasst eine Bremsbrücke 20.1 und ist über Schraubverbindungen 20.2 an dem Drehgestellrahmen 7 fest positioniert. Die Bremseinheiten 109; 209 können aber auch an einer anderen Stelle am Fahrwerk befestigt sein, beispielsweise an einem Getriebegehäuse oder einem Radsatzflansch des Drehgestells.

Die Zuspanneinrichtung 13 ist mittels zweier Bremshebel 21 als Bremszange ausgebildet. Die Zuspanneinrichtung könnte aber alternativ auch als Bremssattel ausgebildet werden.

Während der Erstmontage der Bremseinheit 109; 209 am Drehgestellrahmen 7 ist mittels der Schraubverbindungen 20.2 eine Justierung der Position der Bremseinheit 109; 209 am Drehgestellrahmen 7 möglich, eine nachträgliche Justierung ist jedoch recht aufwändig.

Hervorgerufen durch ungleichmäßigen Verschleiß der Bremsbeläge 12 und der Bremsflächen 15 der Bremsscheibe 16, durch Relativbewegung des Drehgestelles 3 oder auch durch Schwergängigkeit der Zuspanneinrichtung 13, kann es im Betriebseinsatz nach der Erstmontage der Bremseinheit 109; 209 trotzdem dazu kommen kann, dass nur einer der Bremsbeläge 12 an der ihm zugeordneten Bremsfläche 15 der Bremsscheibe 16 anliegt bzw. ein Lüftspiel L der beiden Bremsbeläge 12 zu den Bremsflächen 15 unterschiedlich groß wird. Es kann also im Betriebseinsatz zu einem einseitigen Anliegen der Bremsmittel 11, 14 kommen.

Daher ist jedem der beiden Bremshebel 21 jeweils ein Federelement 22 zugeordnet. Die Federelemente 22 stützen sich jeweils mit einem ersten Ende an dem zugeordneten Bremshebel 21 und mit einem zweiten Ende an der Bremsbrücke 20.1 des Verbindungsteils 20 ab.

Die Spannkraft jedes der beiden Federelemente 22 ist einstellbar. Gezeigt ist dies hier allerdings nur bei der zweiten Ausführungsform 209 der Bremseinheit. Gemäß den Figuren 3 und 4 erfolgt hier das Einstellen der Spannkraft jedes der Federelemente 22 jeweils mittels einer als Ganzes mit 23 bezeichneten Einstelleinrichtung.

Die Einstelleinrichtungen 23 umfassen jeweils eine Einstellschraube 23.1 (auch als "Verstellschraube" oder "Anschlagschraube" bezeichnet) eine Gewindebohrung des zugeordneten Bremshebels 20 zum Eingriff der Einstellschraube 23.1 und einen in dem jeweiligen Bremshebel ausgebildeten Führungsschlitz zum Führen des am Bremshebel abgestützten Endes des Federelementes, das als hebelartiger Schenkel ausgebildet ist.

Das Einstellen der Spannkräfte der Federelemente 22 bietet die Möglichkeit, im Betriebseinsatz auf einseitiges Anliegen der Bremsmittel 11, 14 schnell und einfach reagieren zu können. Es kann also beispielsweise ein Relativversatz der Befestigung der Bremseinheit 109; 209 in Querrichtung y relativ zu den Bremsflächen 15 der Bremsscheibe 16 ausgeglichen und damit die Bremseinheit 109; 209 relativ zur Bremsscheibe 16 zentriert werden.

Zur Bildung der Bremszange sind die beiden Bremshebel 21 jeweils mittels Verbindungsbolzen 24 gelenkig mit dem Verbindungsteil 20 verbunden.

Erste Hebelarme der Bremshebel 21 sind gelenkig mit Aufnahmen 25,26 des Bremsaktors 110; 210 verbunden. Über eine Hubbewegung der Aufnahme 25 werden die Aufnahmen 25, 26 auseinander getrieben und damit die ersten Hebelarme auseinander gespreizt. An zweiten Hebelarmen der Bremshebel 21 sind die Bremsbeläge 12 angeordnet, die beim Auseinanderspreizen der ersten Hebelarme über der Bremsscheibe 16 zugespannt werden.

Neben der Funktion, das Luftspiel L der Bremsbeläge 12 beidseitig der Bremsscheibe 16 gleich zu gestalten (Zentrierfunktion), erfüllen die Federelemente 22 auch eine Rückstellfunktion. Die Rückstellfunktion besteht darin, die Bremszange zu öffnen, wenn der Bremsaktor 110; 210 keine Betätigungskraft zum Zuspannen der Zuspanneinrichtung 13 in die Zuspanneinrichtung einleitet.

Die zweite Ausführungsform 209 der erfindungsgemäßen Bremseinheit ist auch mit einer als Ganzes mit 27 bezeichneten Einrichtung zur Parallelführung der Bremsbeläge ausgerüstet, deren Details hier jedoch nicht weiter beschrieben sind.

Die beiden Ausführungsformen 110 und 210 des Bremsaktors umfassen jeweils eine lokale Elektronik 30, eine Sensoreinrichtung 31 und eine elektro-hydraulische Sollwert-Kraft-Umsetzungseinrichtung 132; 232, wobei der Bremsaktor 110; 210 mit seinen Bestandteilen 30, 31 und 132; 232 und die ersten Bremsmittel 11 mittels des Verbindungsteils 20 zu einer Baueinheit verbunden sind.

Wesentliche Details der lokalen Elektronik 30, der Sensoreinrichtung 31 und der elektro-hydraulische Sollwert-Kraft-Umsetzungseinrichtung 132; 232 sind im Folgenden anhand der in Figur 2 gezeigten ersten Ausführungsform 110 des Bremsaktors näher beschrieben. Soweit entsprechende Teile der zweiten Ausführungsform des 210 des Bremsaktors in den Figuren 3 bis 6 gezeigt sind, sind diese entsprechend bezeichnet.

Die lokale Elektronik 30 bildet eine Sollwerterfassungseinheit 33, die mit einer Sollwertkorrektureinrichtung 34 versehen ist. Außerdem bildet die lokale Elektronik eine Sollwertregelungseinrichtung 35, eine Überwachungseinrichtung 36 eine Rückfalleinrichtung 37 und eine Umschalteinrichtung 38.

In Abhängigkeit des Bremsbefehls fordert die Sollwerterfassungseinheit 33 von zumindest einem der Bremssteuergeräte 17a.1 oder 17b.2 der Bremssteuerung 17b einen Bremssollwert an. Mittels der Sollwertkorrektureinrichtung 34 erfolgt in Abhängigkeit eines Reduziersignals einer hier nicht gezeigten Gleitschutzeinrichtung eine Gleitschutzkorrektur und in Abhängigkeit eines Lastistwertes I.Last eine Lastkorrektur des Bremssollwertes, wobei der derart korrigierte Bremssollwert als Sollwert S.Cp_{B}; S.Fp_{B} einer Anpressgröße Cp_{B}; Fp_{B} oder als Sollwert S.Fv_{B}; S.Mv_{B} einer Verzögerungsgröße Fv_{B}; Mv_{B} an die Sollwertregelungseinrichtung 35 übermittelt wird.

Zur Bestimmung des Lastistwertes I.Last wird der Beladungszustand der Wagen 2.1, 2.2, ..., 2.n des Schienenfahrzeugs 1 an mindestens einer Position im Fahrzeug erfasst und einer zugeordneten der Bremseinheiten 109; 209 oder einer Gruppe der Bremseinheiten, z.B. einer Gruppe der Bremseinheiten in einem der Drehgestelle, sicher mitgeteilt.

Die elektro-hydraulische Sollwert-Kraft-Umsetzungseinrichtung 132; 232 umfasst einen Behälter 41 zum Bereitstellen von Hydraulikflüssigkeit, einen über ein Hydraulikleitungssystem 42 mit dem Behälter 41 verbundenen Bremszylinder 143; 243 mit Bremskolben 144; 244 sowie Steuermittel 45, 46. Die Steuermittel 45, 46 sind geeignet ausgebildet, unter der Einwirkung elektrischer Ausgangssignale AS1, AS2 der Sollwertregelungseinrichtung 35, die über die Umschalteinrichtung 38 ausgegeben werden, einen den Bremskolben 144; 244 beaufschlagenden Istwert I.Cp_{B} eines Hydraulikdruckes Cp_{B} in dem Bremszylinders 143; 243 einzustellen.

Ein aus der Beaufschlagung des Bremskolbens 144; 244 mit dem Hydraulikdruck Cp_{B} resultierender Istwert I.Fp_{B} einer Anpresskraft Fp_{B} wird durch Reibschluss der ersten Bremsmittel 11 mit den zweiten Bremsmitteln 14 in einen Istwert I.Fv_{B} einer Verzögerungskraft Fv_{B} bzw. einen Istwert I.Mv_{B} eines Verzögerungsmomentes Mv_{B} umgesetzt.

Eines der Steuermittel ist ein Pumpenaggregat 45, mittels dessen Hydraulikflüssigkeit aus dem Behälter 41 in den Bremszylinder 43 pumpbar ist. Ein weiteres der Steuermittel ist ein Bremsventil 46. Das Bremsventil 46 ist geeignet ausgebildet, Hydraulikflüssigkeit aus dem Bremszylinder 43 in den Behälter 41 abfließen zu lassen.

Die Sensoreinrichtung 31, die Bestandteil der Bremseinheit 109 bzw. 209 ist, ermittelt mittels eines ersten Sensors 31.1 (Druckaufnehmer) den Istwert I.Cp_{B} des Hydraulikdruckes oder mittels eines zweiten Sensors 31.2 den Istwert I.Fp_{B} der Anpresskraft als Istwert der Anpressgröße und/oder mittels eines dritten Sensors 31.3 den Istwert I.Fv_{B} der Verzögerungskraft oder mittels eines vierten Sensors 31.4 den Istwert I.Mv_{B} des Verzögerungsmomentes als Istwert der Verzögerungsgröße.

Die Sollwertregelungseinrichtung 35, die ebenfalls Bestandteil der Elektronik 30 der Bremseinheit 109 bzw. 209 ist, ist geeignet ausgebildet, zur Regelung der Verzögerungsgröße Fv_{B}; Mv_{B} die Ausgangssignale AS1, AS2 so auszugeben, dass der erfasste Istwert I.Fv_{B}; I.Mv_{B} der Verzögerungsgröße Fv_{B}; Mv_{B} dem Sollwert S.Fv_{B}; S.Mv_{B} der Verzögerungsgröße Fv_{B}; Mv_{B} entspricht, oder zur Regelung der Anpressgröße Cp_{B}; Fp_{B} die Ausgangssignale AS1, AS2 so einzugeben, dass der erfasste Istwert I.Cp_{B}; I.Fp_{B} der Anpressgröße Cp_{B}; Fp_{B} dem Sollwert S.Cp_{B}; S.Fp_{B} der Anpressgröße Cp_{B}; Fp_{B} entspricht.

Im Folgenden werden der Auf- und Abbau einer geregelten Bremskraft F_{B} und die Bereitstellung einer passiven lastkorrigierten Notbremskraft F_{N} des Bremskolbens 144; 244 im Detail näher beschrieben.

Die Bremsscheibe 16 wird durch Anpressen der Bremsbelägen 12 an die Bremsflächen 15 gebremst. Das Anpressen erfolgt unter der Einwirkung der geregelten Bremskraft F_{B} oder unter der Einwirkung der passiven lastkorrigierten Notbremskraft F_{N} des Bremskolbens 144; 244, welcher in dem Bremszylinder 143; 243 aufgenommen ist und unter der Einwirkung des im Bremszylinder 143; 243 geregelt aufgebauten Hydraulikdruckes Cp_{B} oder unter der Einwirkung eines auf den Bremszylinder gegebenen passiven lastkorrigierten Hydraulikdruckes Cp_{N} steht. Die geregelte Bremskraft F_{B} bzw. die Notbremskraft F_{N} des Bremskolbens 44 wird über die Zuspanneinrichtung 13 in die geregelte Anpresskraft Fp_{B} bzw. in die passive Anpresskraft Fp_{N} umgesetzt, also über die Zuspanneinrichtung 13 als Anpresskraft Fp_{B} bzw. Fp_{N} auf die Bremsbeläge 12 geleitet.

Der Aufbau der geregelten Bremskraft F_{B} erfolgt dabei über den geregelten Aufbau des Hydraulikdruckes Cp_{B} in einer Ausfahrkammer 143.1; 243.1 des Bremszylinders 43 durch das Pumpenaggregat 45. Hierzu pumpt das Pumpenaggregat 45 Hydraulikflüssigkeit in Form von Hydrauliköl vom Behälter 41 über ein Rückschlagventil 47 in die Ausfahrkammer 143.1; 243.1 des Bremszylinders 143; 243. Das Rückschlagventil 47 verhindert bei abgeschaltetem Pumpenaggregat 45 ein Zurückströmen von Hydrauliköl in den Behälter 41.

Der geregelte Abbau der Bremskraft F_{B} erfolgt über einen geregelten Abbau des Hydraulikdruckes Cp_{B} in der Ausfahrkammer 143.1; 243.1 des Bremszylinders durch das Bremsventil 46. Das Bremsventil 46 ist vorzugsweise ein diskret schaltendes Sitzventil, welches eine sehr geringe Leckage aufweist.

Hydraulische Drosseln 48 und 49 begrenzen die Geschwindigkeit des Aufbaus des Hydraulikdruckes in der Ausfahrkammer 143.1; 243.1 des Bremszylinder 143; 243 und des Abbaus des Hydraulikdruckes in der Ausfahrkammer 143.1; 243.1 des Bremszylinder 143; 243.

Da das Gewicht und damit die abzubremsende Masse des Schienenfahrzeugs 1 abhängig vom Beladungszustand variieren kann, könnte eine zu hoch angesetzte Notbremskraft F_{N} zu einem Überbremsen oder eine zu niedrig angesetzte Notbremskraft F_{N} zu einem Unterbremsen des Schienenfahrzeuges 1 führen. Das Überbremsen könnte zum Gleiten und zu Flachstellen an Rad 6 und Schiene S führen. Das Unterbremsen könnte zu unzulässig hohen Bremswegen führen.

Um dies zu vermeiden sind bei der erfindungsgemäßen Bremseinheit 9; 109; 209 Mittel zur Bereitstellung der Notbremskraft F_{N} als lastkorrigierte Notbremskraft vorgesehen. Dabei erfolgt das Einstellen dieser Notbremskraft - also die Anpassung dieser Notbremskraft an das aktuelle Gewicht des Fahrzeugs - innerhalb der zulässigen Grenzen (leer/beladen), wenn:
a) Das Fahrzeug steht oder/und
b) eine Türfreigabe zurück genommen worden ist und/oder die Türen geschlossen sind und/oder
c) ein Bremse gelöst Befehl ansteht und/oder
d) ein Fahrbefehl ansteht und/oder
e) die Geschwindigkeit des Fahrzeugs geringer als 10km/h ist.

Die Bereitstellung der lastkorrigierten Notbremskraft F_{N} erfolgt dadurch, dass der passive lastkorrigierte Hydraulikdruck Cp_{N} auf die Ausfahrkammer 143.1; 243.1 des Bremszylinders gegeben wird. Hierzu weist die Sollwert-Kraft-Umsetzungseinrichtung 132; 232 einen unter einem Vorspanndruck p_{N} an einem Anschlussabschnitt 42.1 das Hydraulikleitungssystem 42 angeschlossenen Druckgeber 50, und weitere Steuermittel 51 auf, wobei die weiteren Steuermittel 51 geeignet ausgebildet sind, unter der Einwirkung eines elektrischen Ausgangs Signals AS3 der Rückfalleinrichtung 37, das bei Eingang eines Umschaltsignals US der Überwachungseinrichtung über die Umschalteinrichtung 38 ausgegeben wird, den Druckgeber 50 derart freizugeben, dass der Istwert I.p_{N} des Vorspanndruckes p_{N} zur Beaufschlagung des Bremskolbens als Istwert I.Cp_{N} des Hydraulikdrucks Cp_{N} auf die Ausfahrkammer des Bremszylinders gegeben wird.

Der Druckgeber 50 ist ein Gasdruckspeicher oder alternativ ein Federspeicher.

Mittels der Rückfalleinrichtung 37 erfolgt in Abhängigkeit des Lastistwertes I.Last eine Lastkorrektur eines vorgegebenen Notbremssollwertes, wobei der derart lastkorrigierte Notbremssollwert als lastkorrigierter Sollwert S.p_{N} des Vorspanndruckes des Druckgebers 50 bereitgestellt wird.

Die Sollwert-Kraft-Umsetzungseinrichtung 132; 232 umfasst Lastkorrekturmittel, mittels derer zum Aufbau des passiven lastkorrigierten Vorspanndrucks p_{N} des Druckgebers 50 der Hydraulikdruckes Cp_{N} in dem Anschlussabschnitt 42.1 das Hydraulikleitungssystem in Abhängigkeit elektrischer Ausgangssignale AS4, AS5 der Rückfalleinrichtung auf den lastkorrigierten Sollwert S.Cp_{N} = S.p_{N} einstellbar ist.

Hier bilden die Steuermittel 45, 46 zugleich die Lastkorrekturmittel und sind geeignet ausgebildet, zum Vorspannen des Druckgebers 50 unter der Einwirkung der elektrischen Ausgangssignale AS4, AS5 der Rückfalleinrichtung 37, die über die Umschalteinrichtung 38 ausgegeben werden, den Istwert I.Cp_{N} des Hydraulikdruckes in dem Anschlussabschnitt 42.1 einzustellen, wobei mittels des Pumpenaggregates 45 Hydraulikflüssigkeit aus dem Behälter 41 in den Anschlussabschnitt 42.1 pumpbar ist, und wobei mittels des Bremsventils 46 Hydraulikflüssigkeit aus dem Anschlussabschnitt 42.1 in den Behälter 41 abfließen kann. Ein an den Anschlussabschnitt 42.1 angeschlossener fünfter Sensor in Form eines Druckaufnehmers ermittelt den Istwert I.Cp_{N} des Hydraulikdruckes in dem Anschlussabschnitt 42.1 und damit zugleich den Istwert I.p_{N} des Vorspanndruckes, wobei die Rückfalleinrichtung 37 geeignet ausgebildet ist, zur Regelung des Vorspanndruckes p_{N} des Druckgebers 50 die Ausgangssignale AS4, AS5 so auszugeben, dass der erfasste Istwert I.Cp_{N} = I.p_{N} dem lastkorrigierten Sollwert S.Cp_{N} = S.p_{N} entspricht.

Die weiteren Steuermittel 51 sind von einem Schnellbremsventil gebildet. Bei geöffnetem (entstromtem) Schnellbremsventil 51 wird der Druckgeber 50 gefüllt - der Vorspanndruck des Druckgebers wird also bei beladungsabhängigem zu niedrigem Vorspanndruckruck über das Pumpenaggregates 45 (Motor-Pumpeneinheit)angehoben und bei beladungsabhängigem zu hohem Vorspanndruck über das Bremsventil 46 kontrolliert abgesenkt. Bei gefülltem Druckgeber 50 wird das Schnellbremsventil 51 wieder geschlossen und bleibt im Normalbetrieb geschlossen.

Bei gefülltem Druckgeber 50 wird außerdem über ein hydraulisch betätigtes Ventil 52, welches vorzugsweise einstellbar ausgeführt ist, ein Sperrkolben 153; 253 gegen die Kraft einer Vorspannfeder 154; 254 zurückgehalten.

Auch durch eine mechanische Betätigung 155; 255 lässt sich der Sperrkolben zurückziehen und ein Druckablassventil 56 öffnen. Hierdurch wird ein manuelles Lösen der Bremseinheit 109; 209 möglich.

Der Sperrkolben 153; 253 könnte jedoch auch durch eine hydraulische Betätigung zurückgezogen werden.

Wenn im Betrieb von der Elektronik 30 erkannt wird, dass eine passive Bremsung über den Vorspanndruck p_{N} des Druckgebers 50 notwendig ist, wird durch die Ausgabe des Ausgangssignals A3 das Schnellbremsventil 51 geöffnet um so den Vorspanndruck p_{N} des Druckgebers 50 über den Hydraulikdruck Cp_{N} auf den Bremszylinder 143; 243 zu geben. Der fünfte Sensor 31.5 in Form des Druckaufnehmers misst fortlaufend den Istwert I.Cp_{N}=I.p_{N} und verwendet diesen insbesondere dazu, den Vorspanndruck p_{N} des Druckgebers 50 innerhalb vorgegebener Betriebsgrenzwerte zu halten und um die Verfügbarkeit dieses Vorspanndruckes p_{N} und damit die Verfügbarkeit der passiven Bremsung anzuzeigen. Falls der Vorspanndruck p_{N} des Druckgebers zu stark absinkt, wird ein Nachfüllen des Druckgebers 50 notwendig. Außerdem begrenzt ein Überdruckventil 57 den Hydraulikdruck Cp_{N} als passive Sicherheitseinrichtung.

Der Behälter 41 ist ein Öltank, der von der Umgebungsatmosphäre abgeschlossen ist um den Eintrag von Feuchtigkeit zu minimieren. Nur im Fall des Auftretens von Unterdruck im Öltank wird dieser Unterdruck über eine Ventilanordnung 59 ausgeglichen.

Die beiden Bremskolbeneinrichtungen 119; 219 weisen als Ganzes mit 158; 258 bezeichnete Arretierungsmittel auf, die in einer Sperrstellung geeignet ausgebildet sind, den Bremskolben für eine Parkbremsung mechanisch zu arretieren.

Ferner weisen die beiden Bremskolbeneinrichtungen 119; 219 Als Ganzes mit 159; 259 bezeichnete Mittel zum Voreinstellen des Lüftspiels L der ersten Bremsmittel 11 zu den zweiten Bremsmitteln 14 auf einen vorgegebenen Lüftspielwert S.L auf. Diese Mittel 159; 259 sind geeignet ausgebildet, bei einem Verschleiß der Bremsmittel 11, 14 das Lüftspiel L auf den vorgegebenen Lüftspielwert S.L automatisch nachzustellen.

Außerdem weisen die beiden Bremskolbeneinrichtungen 119; 219 Als Ganzes mit 160; 260 bezeichnete Rückstellmittel auf, mittels derer sich die Bremseinheit zum Beispiels für einen Wechsel der Bremsbeläge in einen vollständig offenen Zustand überführen lässt. Mit vollständig offen ist dabei ein Zustand gemeint, bei dem der Abstand der ersten Bremsmittel 11 zu den zweiten Bremsmittel 14 wesentlich größer als der vorgegebene Lüftspielwert S.L des Lüftspiels L ist.

Bei der in Figur 2 gezeigten ersten Ausführungsform 109 der erfindungsgemäßen Bremseinheit sind die Arretierungsmittel 158 zum mechanischen Arretieren des Bremskolbens von den Mitteln 159 zum Voreinstellen des Lüftspiels L und den Rückstellmitteln 160 räumlich getrennt.

Im Folgenden wird zunächst das mechanische Arretieren des Bremskolbens 144 und damit das dauerhafte mechanische Aufrechterhalten der Bremskraft F_{B} bzw. der Anpresskraft Fp_{B} - also eine Parkbremsfunktion - näher erläutert.

Infolge einer Leckage von hydraulischen Komponenten der elektro-hydraulischen Sollwert-Kraft-Umsetzungseinrichtung 132, welche mit dem Hydraulikdruck Cp_{B} beaufschlagt sind, kann der Hydraulikdruck Cp_{B} und somit letztendlich auch die Anpresskraft Fp_{B} über die Zeit abfallen. Um einen solchen Abbau der Anpresskraft Fp_{B} zu begrenzen, kann optional im Parkbremsfall die Bewegung des Bremskolbens 144 mechanisch arretiert werden. Dies wird mittels der Arretierungsmittel 158 erreicht.

Die Arretierungsmittel 158 umfassen hierzu eine nichtselbsthemmende Gewindespindel 161, welche konzentrisch in den Bremskolben 144 eingeschraubt ist und sich am Bremszylinder 143 abstützt. Ein Sperrrad 162, das mit der Gewindespindel 161 verbunden ist, wird bei der Sperrstellung des Sperrkolbens 153 in ihrer Drehung gehindert, da in der Sperrstellung eine Arretierungsklinke 153.1 des Sperrkolbens 153 in eine Sperrnut 162.1 des Sperrrades 162 eingreift, Dadurch wird eine Bewegung des Bremskolbens 144 verhindert und somit der gerade vorherrschende Istwert I.Fp_{B} zum Parken (Festhalten) des Schienenfahrzeugs 1 aufrechterhalten. Durch die mechanische Betätigung 155 lässt sich der Sperrkolben 153 aus seiner Sperrstellung in eine Gelöststellung zurückziehen und das Druckablassventil 56 öffnen. Hierdurch wird das manuelle Lösen der Bremseinheit 109 möglich.

Im Weiteren wird das Nachstellen des Lüftspiels L erläutert.

In einer gelösten Stellung der Bremseinheit, bei der die Kraft der Rückstellfedern 22 größer ist als die aus der Bremskraft F_{B} resultierende Anpresskraft Fp_{B}, liegt ein erster Anschlag 144.1 des Bremskolbens 144 unter der Kraft der Rückstellfedern 22 an einem zugeordneten ersten Anschlag 163.1 eines als Sperrschieber ausgebildeten Sperrelementes 163 an. Beim Aufbau des Hydraulikdruckes Cp_{B} bewegt sich der Bremskolben 144 durch ein Drehen der Gewindespindel 161 einen Stellweg, der dem vorgegebenen Lüftspielwert S.L entspricht, vom den ersten Anschlag 163.1 bis zu einem zweiten Anschlag 163.2 des Sperrschiebers. Bei nicht verschleißten Bremsmitteln 11, 14 schlägt der Bremskolben 144 bei einem vorgegebenen maximalen Wert der Bremskraft F_{B} mit einem zweiten Anschlag 144.2 an dem zweiten Anschlag 163.2 an. Wird jedoch durch Verschleiß der Bremsmittel 11, 12 der zweite Anschlag 163.2 erreicht, bevor der maximale Wert der Bremskraft F_{B} wirkt, so führt ein weiterer Aufbau des Hydraulikdruckes Cp_{B} dazu, dass sich der Bremskolben 144 unter Mitnahme des Sperrschiebers 163, an dem die beiden Anschläge 163.1 und 163.2 ausgebildet sind, einen Nachstellweg weiter bewegt. Es erfolgt also ein Nachstellen des Bremskolbens 144.

Der Sperrschieber 163 ist mit einer feinen Verzahnung 163.3 versehen, in die unter der Kraft einer Vorspannfeder 164 ein als Sperrklinke ausgebildetes Sperrglied 165 eingreift, so dass der um den Nachstellweg verschobene Sperrschieber 163 zum Ende des Nachstellens wieder arretiert ist.

Beim Abbau des Hydraulikdruckes Cp_{B} fährt der Bremskolben 144 nicht den Nachstellweg sondern nur den Stellweg vom zweiten Anschlag 163.2 zum ersten Anschlag 163.1 zurück und erzeugt somit wieder den vorgegebenen Lüftspielwert S.L des Lüftspiels L.

Im Folgenden wird das Rückstellen des Bremskolbens 144 näher erläutert. Die Sperrklinke 165 bildet das Sperrglied, das mittels der Vorspannfeder 164 in einer mit dem Sperrschieber 163 in Eingriff stehenden Stellung gehalten ist, wobei der Sperrschieber 163 das Öffnen der Bremse auf den vorgegebenen Lüftspielwert begrenzt, da die ersten Anschläge 144.1 und 163.1 aneinander anschlagen. Die mechanische Betätigung 155, die zugleich als ein Betätigungsmittel zum Betätigen des Sperrgliedes 165 dient, ist geeignet ausgebildet, das Sperrglied 165 entgegen der Kraft der Vorspannfeder 164 in eine vom Sperrschieber 144 gelöste Stellung zu verschieben.

Bei der in den Figuren 3 bis 12 gezeigten zweiten Ausführungsform 209 der erfindungsgemäßen Bremseinheit, sind die Arretierungsmittel 258 zum mechanischen Arretieren des Bremskolbens 244, die Mittel 259 zum Voreinstellen des Lüftspiels L und die Rückstellmittel 260 räumlich nicht voneinander getrennt.

Auch hier kann mittels der Arretierungsmittel 258 in einem Parkbremsfall die Bewegung des Bremskolbens 244 mechanisch arretiert werden.

Die Arretierungsmittel 258 umfassen hierzu wieder eine nichtselbsthemmende Gewindespindel 261, welche konzentrisch in den Bremskolben 244 eingeschraubt ist und sich am Bremszylinder 243 abstützt. Ein Sperrrad 262, das über eine Verzahnung 262.2, hier Stirnverzahnung, mit einer Verzahnung 261.2 der Gewindespindel 261 verbunden ist, wird durch die Arretierungsklinke 253.1 des Sperrkolbens 253 in ihrer Drehung gehindert. Dadurch wird eine Bewegung des Bremskolbens 244 verhindert und somit die Bremskraft F_{B} aufrechterhalten. Durch die mechanische Betätigung 255 lässt sich der Sperrkolben 253 zurückziehen und das Druckablassventil 56 öffnen. Hierdurch wird ein manuelles Lösen der Bremseinheit 209 möglich. Die mechanischen Betätigung 255 umfasst einen Zugkolben 255.1 mit einem Querstift 255.2, der in den Sperrkolben 253 eingreift sowie Führung 255.3 für den Zugkolben.

Im Weiteren wird das Nachstellen des Lüftspiels näher erläutert.

In einer gelösten Stellung der Bremseinheit 209, bei der die Kraft der Rückstellfedern 22 größer ist als die aus der Bremskraft F_{B} resultierende Anpresskraft Fp_{B}, liegt das Sperrrad 262 unter der Kraft der Rückstellfedern 22 mit einem ersten Anschlag 262.3 an einem zugeordneten ersten Anschlag 270.1 an, der am Bremszylinder abgestützt ist. Beim Aufbau des Hydraulikdruckes Cp_{B} bewegt sich der Bremskolben 244 durch ein Drehen der Gewindespindel 261 einen Stellweg, bis das Sperrrad mit einer zweiten Anschlag262.4 an einem zugeordneten zweiten Anschlag 270.2 anschlägt, der ebenfalls am Bremszylinder abgestützt ist.

Bei nicht verschleißten Bremsmitteln 11, 14 schlägt das Sperrrad 262 beim Schließen der Bremseinheit bei einem vorgegebenen maximalen Wert der Bremskraft F_{B} an dem zweiten Anschlag 270.2 an. Wird jedoch durch Verschleiß der Bremsmittel 11, 12 der zweite Anschlag 270.2 erreicht, bevor der maximale Wert der Bremskraft F_{B} wirkt, so führt ein weiterer Aufbau des Hydraulikdruckes Cp_{B} zu einer Verdrehung zwischen Sperrrad 262 und Gewindespindel 261, die über die feinen Verzahnungen 262.2 und 261. 2verbunden sind. Beim Abbau des Hydraulikdruckes Cp_{B} fährt der Bremskolben 244 wieder den Stellweg ohne den Nachstellweg zurück, bis das Sperrrad an dem ersten Anschlag 270.1 anschlägt, und erzeugt somit wieder das vorgegebene Lüftspiel L. Die beiden Anschläge 270.1 und 270.2 sind einstellbar ausgeführt. Anstelle der Verbindung über die Verzahnungen 262.2 und 261.2 kann auch eine reibschlüssige Verbindung zwischen dem Sperrrad und der Gewindespindel, z.B. über einen Konus, gewählt werden.

Zum vollständigen Öffnen der Bremseinheit 209 dienen wieder die Rückstellmittel 260. Zu diesen Rückstellmitteln gehören wieder Betätigungsmittel 275, 276, 277 wobei hier - mittels der Vorspannfeder 273 die Gewindespindel 261 als Sperrglied in einer mit dem Sperrelement 262 in Eingriff stehenden Stellung gehalten ist und die Betätigungsmittel 275, 276, 277 geeignet ausgebildet sind, die Gewindespindel 261 entgegen der Kraft der Vorspannfeder 273 in eine vom Sperrelement 262 gelöste Stellung zu verschieben.

Die Betätigungsmittel 275, 276, 277 weisen einen Zuganker 275, eine Zugankerschraube 276 sowie einen durch Drehen der Zugankerschraube 276 über eine Führung 275.1 im Zuganker axial verschiebbaren Stift 277 auf, wobei die Vorspannfeder 273 am Zuganker 275 abgestützt ist und wobei die Gewindespindel 261 in die Bewegungsbahn des Stiftes 277 ragende Betätigungsflächen 261.1 bildet, die derart ausgebildet sind, dass die Gewindespindel 261 beim Verschieben des Stiftes 277 entgegen der Kraft der Vorspannfeder 273 in die vom Sperrelement 262 gelöste Stellung verschoben wird.

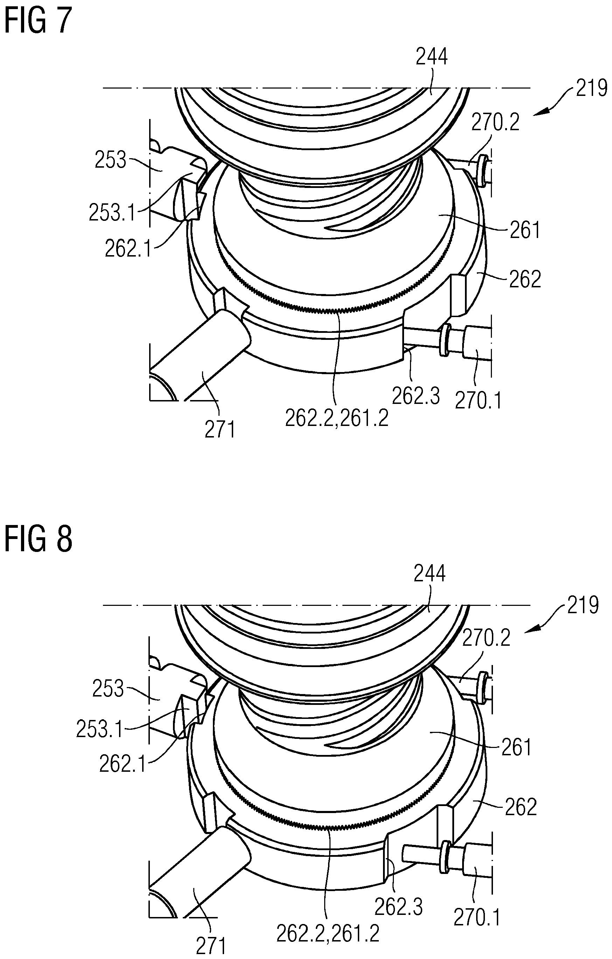

Im Folgenden wird das Einlegen der Parkbremsung mit gleichzeitigem Nachstellen des Lüftspiels L anhand der Figuren 7 bis 12 noch einmal näher erläutert.

Fig. 7 zeigt einen Anfangszustand, bei dem die Bremseinheit 209 bei maximalem Lüftspiel geöffnet ist.

Auf den Bremskolben 244 wirkt eine konstante, bremsenöffnende hydraulische Kraft Cp_{B}, da eine Einfahrkammer 243.2 (vgl. Figur 5) aus dem Speicher 41 permanent druckbeaufschlagt wird. Der Bremskolben 244 wird in der Stellung blockiert, die dem maximalen Lüftspiel entspricht. Die Bremskolbenblockierung wird gemäß vorangegangener Beschreibung von der Gewindespindel 261 hervorgerufen, welche sich nicht drehen kann, da das Sperrrad 262 an dem ersten Anschlag 270.1 anschlägt. Das Drehmoment der Gewindespindel 261 wird über den Eingriff der einander zugeordneten Verzahnungen261.2, 262.2 auf das Sperrrad 262 übertragen. Der Eingriff der Verzahnungen kann nicht lösen, da die Gewindespindel 261 von der Kraft des Bremskolbens 244 axial belastet wird.

Ein Näherungsschalter 271 ist geöffnet, weil eine Anzeigenut 262.5 des Sperrrades in seinem Erkennungsbereich liegt. Die Arretierungsklinke 253.1 ist hydraulisch zurückgezogen.

Fig. 8 zeigt einen Zwischenzustand der Bremseinheit 209, bei dem das Lüftspiel L der Bremsbeläge überwunden wurde und die Bremsbeläge ohne Kraft an der Bremsscheibe anliegen.

Dieser Zustand wurde erreicht durch Erhöhung des Hydraulikdruckes Cp_{N} in der Ausfahrkammer 243.1 des Bremszylinders 243. Die Kraft der Rückstellfedern 22 wurde überwunden und der Bremskolben 244 bewegte sich in die dargestellte Position. Die Gewindespindel 261 drehte sich entsprechend, da einerseits der Bremskolben 244 nicht-drehbar gelagert ist und andererseits die Gewindespindel 261 derart gelagert ist, dass sie nur Drehbewegungen ausführen kann. Diese axiale Fixierung wird dadurch erreicht, dass die Gewindespindel von einer Vorspannfeder 272 (vgl. Figur 5) gegen ein Axial-Wälzlager 273.1, 273.2 gedrückt wird, welches sich wiederum am Gehäuse des Bremszylinders 243 abstützt. Diese Axialkraft verhindert auch ein Lösen der Stirnverzahnung. Der Näherungsschalter 271 ist geschlossen, da die Anzeigenut 262.5 außerhalb seines Erkennungsbereichs liegt.

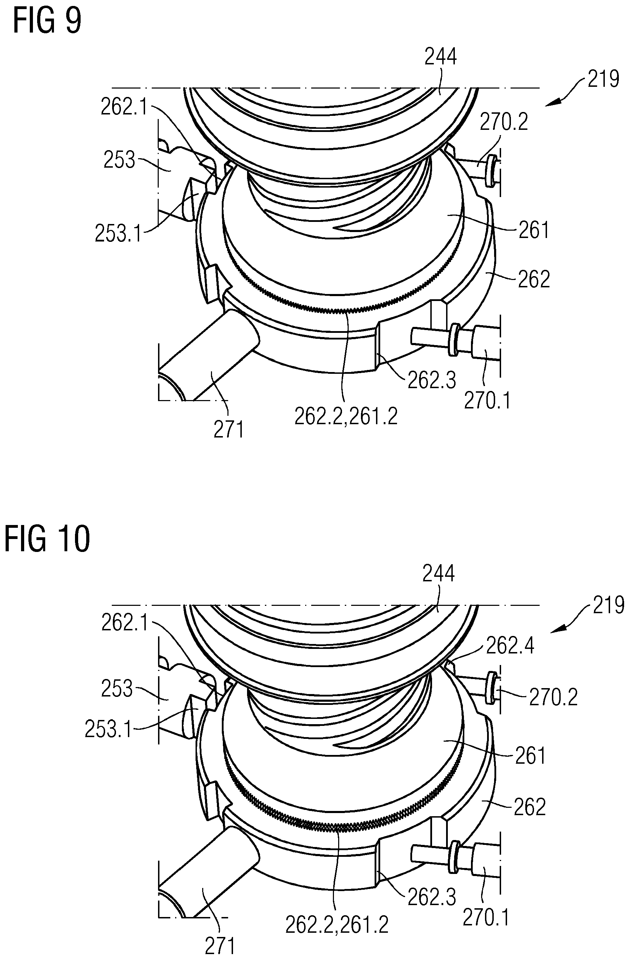

Fig. 9 zeigt den nächsten Zwischenzustand, bei dem die Bremskraft bis zur Blockierung durch das Sperrrad 262 aufgebaut ist. Der Bremskolben 244 bewegte sich also weiter infolge weiterer Bremsdruckerhöhung, bis das Sperrrad 262 auf den zweiten Anschlag 270.2 aufschlägt. Die Kraft auf die Bremsbeläge erhöhte sich linear entsprechend der Federsteifigkeit der Bremszangenanordnung.

Fig. 10 zeigt den nächsten Zwischenzustand, bei dem die Bremskraft F_{B} bis zum Abheben der Stirnverzahnung 261.2 von der Stirnverzahnung 262.2 aufgebaut ist. Der Bremszylinderdruck Cp_{B} wurde weiter erhöht, was zur Folge hatte, dass der Bremskolben 244 - entsprechend der Bremszangensteifigkeit - weiter ausgefahren ist. Das Sperrrad 262 und die Gewindespindel 261 konnten sich jedoch nicht mehr weiter drehen. Als Folge zieht der Bremskolben 244 an der Gewindespindel 261, sodass die Kraft der Vorspannfeder 272 überwunden wird. Die Stirnverzahnung 261.2 beginnt sich von der Stirnverzahnung 262.2 zu trennen. Im direkten Vergleich von Fig. 9 mit Fig. 10 ist erkennbar, dass die Gewindespindel 261 sich vom Sperrrad 262 getrennt hat, wenn auch nur wenig (wegen der hohen Zähnezahl der Stirnverzahnungen (261.2, 262.2). Der Trennvorgang ist eine Bewegung, die aus der Kombination einer axialen Bewegung und einer Rotation der Gewindespindel resultiert.

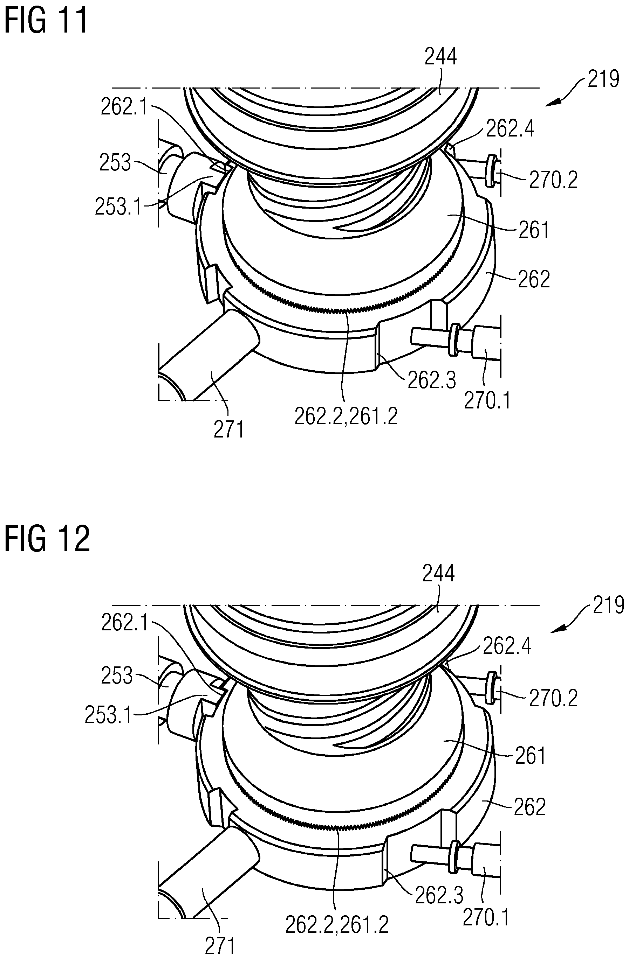

Fig. 11 zeigt den nächsten Zwischenzustand, bei dem die Bremskraft F_{B} soweit aufgebaut ist, dass die Stirnverzahnung 261.2 gegenüber der Stirnverzahnung 262.2 weitergerastet ist und bei dem anschließend die Arretierungsklinke 253.1 des Sperrkolbens 253 in die Sperrnut 262.5 des Sperrrades 262 eingefallen ist. Der Bremszylinderdruck Cp_{B} wurde also weiter erhöht. Die Gewindespindel 261 erfuhr weiterhin die Überlagerung von axialem Abheben und Drehung, solange bis sich die Zahnspitzen der Stirnverzahnungen 261.2, 262.2 gegenüberstanden. Im darauf folgenden Augenblick sprang die Stirnverzahnung 261.2 schlagartig in die nächste Zahnteilung der Stirnverzahnung 262.2 und befindet sich wieder im Eingriff mit der Stirnverzahnung 262.2, d.h. ist weitergerastet. Der vollständige Eingriff in der nächsten Zahnteilung wurde geometrisch möglich, da das Sperrrad 262 durch den Eingriffsvorgang geringfügig zurückbewegt wurde (vom zweiten Anschlag 270.2 abhob). Dieser Vorgang des Weiterrastens der Stirnverzahnungen erfolgt nur, wenn der Bremskolben 244 infolge Bremsbelag- und Scheibenverschleiß ausreichend weit ausfahren kann. Ist dieser Verschleißzustand noch nicht erreicht, fährt die Stirnverzahnung 261.2 beim Lösen der Bremseinheit wieder in den ursprünglichen Eingriff mit der Stirnverzahnung 262.2 zurück. Anschließend wurde das hydraulische Zurückhalten des Sperrkolbens 253 aufgehoben und er ist mittels einer Federkraft in die Sperrnut 262.1 des Sperrrades 262 eingefallen.

Fig. 12 zeigt den Zielzustand bei der Parkbremsung, bei dem die Arretierungsmittel 158 - also die mechanische Parkbremsarretierung - aktiv ist. Der Bremszylinderdruck Cp_{B} wurde also abgebaut, der Bremskolben 244 bewegte sich zurück, solange bis seine Zurückbewegung vom Sperrbolzen 253 blockiert wurde.

Die erfindungsgemäße Bremseinheit bietet insbesondere folgende Vorteile:
Die Bremseinheit weist keine externen hydraulischen Schnittstellen und damit keine hydraulischen Leitungs-, Rohr- oder Schlauchverbindungen zum Fahrzeug auf. Die Bremseinheit weist als externe Schnittstellen zum Fahrzeug oder zur Bremssteuerung lediglich Schnittstellen auf, die der Spannungsversorgung oder der Übertragung von Signalen dienen. Die integrierte hydraulische Schaltung ermöglicht damit in kompakter Bauweise über die Bereitstellung der geregelten Bremskraft F_{B} aktiv geregelte Betriebsbremsungen, Notbremsungen oder Schnellbremsungen, eine hydraulisch und/oder mechanisch betätigte und arretierbare Parkbremsfunktion sowie über die Bereitstellung der passiven Notbremskraft F_{N} passive Notbremsungen.

Die Einstellung und Verschleißnachstellung des Lüftspiels L ist insbesondere konstruktiv einfach verwirklicht und die bewegten Teile befinden sich dabei im Hydraulikmedium wodurch die Gefahr von Klemmen und der Verschleiß der bewegten Teile gemindert werden.

Über einen Abstandssensor 171 und/oder den Schalter 271 wird eine gelöste Bremseinheit sicher erkannt. Zusätzlich ist mittels der Sensoreinrichtung 31 das Erkennen einer festsitzenden Bremse möglich.

Mittels der erfindungsgemäßen Bremseinheiten 9; 109; 209 kann ein verzögerungsgeregeltes Bremssystem 8 realisiert werden, welches im Betrieb zusätzlich Bremswegsicherheit bietet.

Über eine Parametrierung von Bremskennwerten der erfindungsgemäßen Bremseinheit lässt sich die erfindungsgemäße Bremseinheit projektspezifisch auf einfache Weise anpassen, so dass ein Höchstmaß an Standardisierung mit dieser Bremseinheit erreicht werden kann.

## Patentansprüche

1. Bremseinheit (9; 109; 209) für ein Fahrzeug, insbesondere ein Schienenfahrzeug (1),
mit einer elektro-hydraulischen Sollwert-Kraft-Umsetzungseinrichtung (132; 232), die einen Behälter (41) zum Bereitstellen von Hydraulikflüssigkeit, einen über ein Hydraulikleitungssystem (42) mit dem Behälter (41) verbundenen Bremszylinder (143; 243) mit Bremskolben (144; 244) sowie Steuermittel (45, 46) umfasst,
wobei die Steuermittel (45, 46) geeignet ausgebildet sind, unter der Einwirkung elektrischer Ausgangssignale (AS1, AS2) einer Sollwertregelungseinrichtung (35) einen den Bremskolben (144; 244) beaufschlagenden Istwert (I.Cp_{B}) eines Hydraulikdruckes (Cp_{B}) in dem Bremszylinder (143; 243) einzustellen,
wobei eines (45) der Steuermittel ein Pumpenaggregat ist, mittels dessen Hydraulikflüssigkeit aus dem Behälter (41) in den Bremszylinder (143; 243) pumpbar ist, und
wobei ein weiteres (46) der Steuermittel geeignet ausgebildet ist, Hydraulikflüssigkeit aus dem Bremszylinder (144; 244) in den Behälter (41) abfließen zu lassen, **gekennzeichnet, durch**
Mittel (159; 259) zum Voreinstellen eines Lüftspiels (L) erster Bremsmittel (11) zu zweiten Bremsmitteln (14) auf einen vorgegebenen Lüftspielwert (S.L),
wobei die Mittel (259) eine konzentrisch in den Bremskolben eingeschraubte, nichtselbsthemmende Gewindespindel (261), ein mittels Stirnverzahnung oder Reibschluss mit der Gewindespindel (261) verbundenes, mittels eines Axial-Wälzlagers am Bremszylinder abgestütztes Sperrrad (262) und zwei den Drehwinkel des Sperrrades (262) auf einen vorgegebenen Drehwinkelwert eingrenzende Anschläge (270.1, 270.2) umfassen.

2. Bremseinheit (109; 209) nach Anspruch 1,
**dadurch gekennzeichnet dass** die ersten Bremsmittel (11) geeignet ausgebildet sind, einen aus der Beaufschlagung des Bremskolbens (144; 244) resultierenden Istwert (I.Fp_{B}) einer Anpresskraft (Fp_{B}) durch Reibschluss mit zweiten Bremsmitteln (14) in einen Istwert (I.Fv_{B}; I.Mv_{B}) einer Verzögerungsgröße (Fv_{B}; Mv_{B}) umzusetzen.

3. Bremseinheit (109; 209) nach Anspruch 2,
**gekennzeichnet durch**
ein Verbindungsteil (20) zur Befestigung der Bremseinheit, insbesondere an einem Fahrwerk (3) eines Schienenfahrzeugs (1),
wobei die Sollwert-Kraft-Umsetzungseinrichtung (132; 232) und die ersten Bremsmittel (11) mittels des Verbindungsteils (20) zu einer Baueinheit verbunden sind.

4. Bremseinheit (109; 209) nach einem der Ansprüche 1 bis 3,
**dadurch gekennzeichnet, dass**
die Sollwertregelungseinrichtung (35) und eine Sensoreinrichtung (31) Bestandteile der Bremseinheit (109; 209) sind,
wobei die Sensoreinrichtung (3), den Istwert (I.Cp_{B}) des Hydraulikdruckes oder den Istwert (I.Fp_{B}) der Anpresskraft als Istwert einer Anpressgröße und/oder den Istwert (I.Fv_{B}; I.Mv_{B}) der Verzögerungsgröße (Fv_{B}; Mv_{B}) ermittelt und
wobei die Sollwertregelungseinrichtung (35) geeignet ausgebildet ist, zur Regelung der Verzögerungsgröße (Fv_{B}; Mv_{B}) die Ausgangssignale (AS1, AS2) so auszugeben, dass der erfasste Istwert (I.Fv_{B}; I.Mv_{B}) der Verzögerungsgröße (Fv_{B}; Mv_{B}) zumindest einen Sollwert (S.Fv_{B}; S.Mv_{B}) der Verzögerungsgröße (Fv_{B}; Mv_{B}) entspricht, oder zur Regelung der Anpressgröße (Cp_{B}; Fp_{B}) die Ausgangssignale (AS1, AS2) so einzugeben, dass der erfasste Istwert (I.Cp_{B}; I.Fp_{B}) der Anpressgröße (Cp_{B}; Fp_{B}) einem Sollwert (S.Cp_{B}; S.Fp_{B}) der Anpressgröße (Cp_{B}; Fp_{B}) entspricht.

5. Bremseinheit (109; 209) nach einem der Ansprüche 1 bis 4,
**dadurch gekennzeichnet, dass**
die Mittel (159; 259) geeignet ausgebildet sind bei einem Verschleiß der Bremsmittel (11, 14) das Lüftspiel (L) auf den vorgegebenen Lüftspielwert (S.L) automatisch nachzustellen.

6. Bremseinheit (209) nach einem der Ansprüche 1 bis 5,
**dadurch gekennzeichnet**,
das der Drehwinkelwert durch Verstellen der Anschläge (270.1, 270.2) einstellbar ist.

7. Bremseinheit (109, 209) nach einem der Ansprüche 1 bis 6,
**gekennzeichnet, durch** Arretierungsmittel (158; 258), die geeignet ausgebildet sind, den Bremskolben (144, 244) in einem Parkbremsfall mechanisch zu arretieren.

8. Bremseinheit (109; 209) nach Anspruch 7,
**dadurch gekennzeichnet, dass**
die Arretierungsmittel (158; 258) eine Arretierungsklinke (153.1; 253.1) umfassen, die geeignet ausgebildet ist, in eine Sperrnut (162.1; 262.1) des Sperrrades (162; 262) einzugreifen.

9. Bremseinheit (109; 209) nach Anspruch 8,
**dadurch gekennzeichnet, dass** die Arretierungsklinke (153.1; 253.1) hydraulisch und/oder mechanisch betätigbar ist.

10. Fahrzeug, insbesondere Schienenfahrzeug (1),
mit einem Fahrwerk (3), an dem eine Bremseinheit zum Reibschluss mit Bremsmitteln eines Radsatzes des Fahrwerks befestigt ist,
**dadurch gekennzeichnet, dass** die Bremseinheit (9; 109; 209) nach einem der Ansprüche 1 bis 9 ausgebildet ist.

## Claims

1. Brake unit (9; 109; 209) for a vehicle, in particular a rail vehicle (1),
with an electrohydraulic setpoint value-force-conversion device (132; 232), which comprises a container (41) for providing hydraulic fluid, a brake cylinder (143; 243) with brake pistons (144; 244) which is connected to the container (41) via a hydraulic line system (42) and control means (45, 46),
wherein the control means (45, 46) are of suitable design so as, under the action of electrical output signals (AS1, AS2) of a setpoint-value-regulating device (35) to set an actual value (I.Cp_{B}) of a hydraulic pressure (Cp_{B}) in the brake cylinder (143; 243) which acts upon the brake piston (144; 244),
wherein one (45) of the control means is a pump assembly by means of which hydraulic fluid can be pumped out of the container (41) into the brake cylinder (143; 243) and
wherein a further (46) one of the control means is of suitable design to allow hydraulic fluid to flow out of the brake cylinder (144; 244) into the container (41),
**characterised by**
means (159; 259) for presetting an air gap (L) between first braking means (11) and second braking means (14) to a prespecified air gap value (S.L),
wherein the means (259) comprise a non-self-locking threaded spindle (261) which is concentrically screwed into the brake piston, a ratchet wheel (262) connected to the threaded spindle (261) by means of face toothing or friction locking supported by means of an axial rolling bearing on the brake cylinder and two stops (270.1, 270.2) that restrict the angle of rotation of the ratchet wheel (262) to a prespecified value of the angle of rotation.

2. Brake unit (109; 209) according to claim 1,
**characterised in that**
the first braking means (11) are of suitable design to convert an actual value (I.Fp_{B}) of a contact force (Fp_{B}) resulting from the action of the brake piston (144; 244) into an actual value (I.Fv_{B}; I.Mv_{B}) of a deceleration parameter (Fv_{B}; Mv_{B}) by friction locking with second braking means (14).

3. Brake unit (109; 209) according to claim 2,
**characterised by**
a connecting part (20) for mounting of the brake unit, in particular on a running gear (3) of a rail vehicle (1),
wherein the setpoint value-force-conversion device (132; 232) and the first braking means (11) are connected to a modular unit by means of the connecting part (20).

4. Brake unit (109; 209) according to one of claims 1 to 3,
**characterised in that**
the setpoint-value-regulating device (35) and a sensor device (31) are components of the brake unit (109; 209),
wherein the sensor device (3) determines the actual value (I.Cp_{B}) of the hydraulic pressure or the actual value (I.Fp_{B}) of the contact force as the actual value of a contact parameter and/or the actual value (I.Fv_{B}; I.Mv_{B}) of the deceleration parameter (Fv_{B}; Mv_{B}) and
wherein the setpoint-value-regulating device (35) is of suitable design, for the regulation of the deceleration parameter (Fv_{B}; Mv_{B}), to output the output signals (AS1, AS2) such that the actual value (I.Fv_{B}; I.Mv_{B}) of the deceleration parameter (Fv_{B}; Mv_{B}) determined at least corresponds to a setpoint value (S.Fv_{B}; S.Mv_{B}) of the deceleration parameter (Fv_{B}; Mv_{B}) or, for the regulation of the contact parameter (Cp_{B}; Fp_{B}), to input the output signals (AS1, AS2) such that the actual value (I.Cp_{B}; I.Fp_{B}) of the contact parameter (Cp_{B}; Fp_{B}) determined corresponds to a setpoint value (S.Cp_{B}; S.Fp_{B}) of the contact parameter (Cp_{B}; Fp_{B}).

5. Brake unit (109; 209) according to one of claims 1 to 4,
**characterised in that**
the means (159; 259) are of suitable design, in the event of wear on the braking means (11, 14), automatically to reset the air gap (L) to the prespecified air gap value (S.L).

6. Brake unit (209) according to one of claims 1 to 5,
**characterised in that**
the value of the angle of rotation can be adjusted by moving the stops (270.1, 270.2).

7. Brake unit (109, 209) according to one of claims 1 to 6,
**characterised by**
locking means (158; 258), which are of suitable design to lock the brake piston (144, 244) mechanically in the case of park braking.

8. Brake unit (109; 209) according to claim 7,
**characterised in that**
the locking means (158; 258) comprise a locking latch (153.1; 253.1), which is of suitable design to engage in a detent groove (162.1; 262.1) of the ratchet wheel (162; 262).

9. Brake unit (109; 209) according to claim 8,
**characterised in that**
the locking latch (153.1; 253.1) can be actuated hydraulically and/or mechanically.

10. Vehicle, in particular a rail vehicle (1), with a running gear (3) on which a brake unit for the friction locking with braking means of a wheel set of the running gear is mounted,
**characterised in that**
the brake unit (9; 109; 209) is embodied according to one of claims 1 to 9.

## Revendications

1. Unité (9; 109; 209) de freinage d'un véhicule, notamment d'un véhicule (1) ferroviaire,
comprenant un dispositif (132; 232) transducteur électro-hydraulique valeur de consigne-force, qui comprend un récipient (41) de mise à disposition de liquide hydraulique, un cylindre (143; 243) de frein, qui communique avec le récipient (41) par un système (42) de conduit hydraulique et qui a un piston (144; 244) de frein ainsi que des moyens (45;, 46) de commande,
dans laquelle les moyens (45, 46) de commande sont propres , sous l'effet de signaux (AS1, AS2) électriques de sortie d'un dispositif (35) de régulation de valeur de consigne, à régler une valeur (I.CpB) réelle, à laquelle est soumis le piston (144; 244) de frein, d'une pression (Cp_{B}) hydraulique dans le cylindre (143; 243) de frein, dans laquelle l'un (45) des moyens de commande est un groupe de pompage au moyen duquel du liquide hydraulique peut être pompé du réservoir (41) dans le cylindre (143; 243) de frein et
dans laquelle un autre (46) des moyens de commande est propre à faire s'écouler du liquide hydraulique du cylindre (144; 244) de frein dans le récipient (41),
**caractérisée par**
des moyens (159; 259) pour régler à l'avance un jeu (L) de premiers moyens (11) de frein à des deuxièmes moyens (14) de frein à une valeur (S.L) de jeu donnée à l'avance,
dans laquelle les moyens (259) comprennent une broche (261) filetée, non autobloquante, vissée concentriquement au piston de frein, une roue (262) à rochet, reliée à la broche (261) filetée au moyen d'un crantage à dent de loup ou par friction et supportée sur le cylindre de frein au moyen d'un palier à roulement axial, et deux butées (270.1, 270.2) limitant l'angle de rotation de la roue (262) à rochet à une valeur d'angle de rotation donnée à l'avance.

2. Unité (109; 209) de freinage suivant la revendication 1,
**caractérisée en ce que**
les premiers moyens (11) de frein sont propres à transformer une valeur (I.Fp_{B}) réelle, provenant de l'alimentation du piston (144; 244) de frein, d'une force (Fp_{B}) d'application d'une pression par frottement par des deuxièmes moyens (14) de frein en une valeur (I.Fv_{B}; I.Mv_{B}) réelle d'une grandeur (Fv_{B}.Mv_{B}) de décélération.

3. Unité (109; 209) de freinage suivant la revendication 2,
**caractérisée par**
une partie (20) de liaison pour fixer l'unité de frein, notamment à un train (3) de roulement d'un véhicule (1) ferroviaire,
dans lequel le dispositif (132; 232) transducteur valeur de consigne-force et les premiers moyens (11) de frein sont reliés en une unité de construction au moyen de la partie (20) de liaison.

4. Unité (109; 209) de freinage suivant l'une des revendications 1 à 3,
**caractérisée en ce que**
le dispositif (35) de régulation de valeur de consigne et un dispositif (31) capteur font partie de l'unité (109; 209) de freinage,
dans laquelle le dispositif (3) capteur détermine la valeur (I.Cp_{B}) réelle de la pression hydraulique ou la valeur (I.Fp_{B}) réelle de la force d'application d'une pression, comme valeur réelle d'une grandeur d'application d'une pression et/ou la valeur (I.Fv_{B}; I.Mv_{B}) réelle de la grandeur (Fv_{B}; Mv_{B}) de décélération et
dans laquelle le dispositif (35) de régulation de la valeur de consigne est propre à émettre, pour réguler la grandeur (Fv_{B}; Mv_{B}) de décélération, les signaux (AS1, AS2) de sortie, de manière à ce que la valeur (I.Fv_{B}; I.Mv_{B}) réelle détectée de la grandeur (Fv_{B}; Mv_{B}) de décélération corresponde au moins à une valeur (S.Fv_{B}; S.Mv_{B}) de consigne de la grandeur (Fv_{b}; Mv_{B}) de décélération, ou à entrer, pour réguler la grandeur (Cp_{B}; Fp_{B}) d'application d'une pression, les signaux (AS1, AS2) de sortie, de manière à ce que la valeur (I.Cp_{B}; I.Fp_{B}) réelle détectée de la grandeur (Cp_{B}. fP_{B}) d'application d'une pression corresponde à une valeur (S.Cp_{B}; S.Fp_{B}) de consigne de la grandeur (Cp_{B}; Fp_{B}) d'application d'une pression.

5. Unité (109; 209) de freinage suivant l'une des revendications 1 à 4,
**caractérisée en ce que**
les moyens (159; 259) sont propres, s'il se produit une usure des moyens (11, 14) de frein, à rattraper automatiquement le jeu (L) jusqu'à une valeur (S.L) de jeu donnée à l'avance.

6. Unité (209) de freinage suivant l'une des revendications 1 à 5,
**caractérisée en ce que** la valeur de l'angle de rotation est réglable par déplacement des butées (270.1, 270.2).

7. Unité (109, 209) de freinage suivant l'une des revendications 1 à 6,
**caractérisée par**
des moyens (158; 258) d'arrêt propres à arrêter mécaniquement le piston (144, 244) de frein dans un cas de frein de stationnement.

8. Unité (109; 209) de freinage suivant la revendication 7,
**caractérisée en ce que**
les moyens (158; 258) d'arrêt comprennent un cliquet (153.1; 253.1) d'arrêt, propre à pénétrer dans un cran (162.1; 262.1) d'arrêt de la roue (162; 262) à rochet.

9. Unité (109; 209) de freinage suivant la revendication 8,
**caractérisée en ce que**
le cliquet (153.1; 253.1) d'arrêt peut être actionné hydrauliquement et/ou mécaniquement.

10. Véhicule, notamment véhicule (1) ferroviaire,
comprenant un train (3) de roulement, auquel est fixée une unité de freinage pour le frottement avec des moyens de frein d'un essieu du train de roulement,
**caractérisé en ce que**
l'unité (9; 109; 209) de freinage est constituée suivant l'une des revendications 1 à 9.
